Europäisches Patentamt

European Patent Office

Office européen des brevets

(19)

(11) Numéro de publication : **0 280 595 B1**

(12) **FASCICULE DE BREVET EUROPEEN**

(45) Date de publication du fascicule du brevet :
06.11.91 Bulletin 91/45

(51) Int. Cl.⁵ : **G21C 3/34**

(21) Numéro de dépôt : **88400184.3**

(22) Date de dépôt : **27.01.88**

(54) **Ressort en épingle à cheveux pour assemblage de combustible nucléaire et grille d'assemblage comportant de tels ressorts.**

(30) Priorité : **29.01.87 FR 8701085**

(43) Date de publication de la demande :
**31.08.88 Bulletin 88/35**

(45) Mention de la délivrance du brevet :
**06.11.91 Bulletin 91/45**

(84) Etats contractants désignés :
**BE DE ES SE**

(56) Documents cités :
**EP-A- 0 163 568**
**DE-A- 3 325 749**
**FR-A- 2 366 669**
**US-A- 3 679 546**

(73) Titulaire : **FRAMATOME**
**Tour Fiat 1, Place de la Coupole**
**F-92400 Courbevoie (FR)**
Titulaire : **COMPAGNIE GENERALE DES**
**MATIERES NUCLEAIRES (COGEMA)**
**2, rue Paul Dautier B.P. 4**
**F-78141 Vélizy-Villacoublay (FR)**

(72) Inventeur : **Sartor, Pierre-Jean**
**29 Avenue Félix Faure**
**F-69003 Lyon (FR)**

(74) Mandataire : **Fort, Jacques et al**
**CABINET PLASSERAUD 84, rue d'Amsterdam**
**F-75009 Paris (FR)**

# Description

L'invention concerne les assemblages de combustible nucléaire et, plus précisément, des ressorts en épingle à cheveux destinés à supporter les crayons de combustible dans des grilles entretoises appartenant à de tels assemblages.

Les assemblages de combustible actuellement utilisés dans les réacteurs refroidis et modérés à l'eau légère comportent un faisceau de crayons de combustible (constitués chacun par un empilement de pastilles dans une gaine étanche) maintenus suivant un réseau régulier dans une structure. Cette dernière comporte deux embouts reliés par des tirants remplaçant les crayons en certains des noeuds du réseau et des grilles réparties le long de l'assemblage et constituées par des plaquettes disposées suivant deux directions orthogonales, pour définir des cellules dont la majeure partie est traversée par les crayons. Chacune de ces cellules est munie de moyens s'appuyant sur le crayon qui traverse la cellule pour le supporter.

Ces moyens peuvent être constitués par une partie découpée des plaquettes, constituant des pattes en appui contre les crayons. Mais la nécessité qu'ils soient en un matériau qui conserve des propriétés mécaniques satisfaisantes sous irradiation conduit alors à constituer l'ensemble de la grille en un matériau à section de capture neutronique élevé, tel qu'un des alliages connus sous le nom d'Inconel. Il est en conséquence avantageux d'utiliser des ressorts rapportés sur les plaquettes, en un matériau différent de celui des plaquettes (par exemple "Inconel" au lieu d'alliage à base de zirconium). Une grille de ce dernier type est décrite par exemple dans le document FR-A-2474229 auquel on pourra se reporter.

Les ressorts ont en général une forme en épingle à cheveux, à deux branches. Souvent, on est amené à prévoir dans une même grille plusieurs types de ressort, du fait que la grille présente des bords et que souvent certaines cellules sont occupées par des éléments autres que des crayons, par exemple par les tirants constituant également tubes guides. Un des types comportera fréquemment deux branches identiques, tandis qu'un autre type aura des branches différentes. Ces ressorts sont d'abord insérés, puis solidarisés définitivement des plaquettes par soudage des deux branches l'une sur l'autre en des zones bien définies, à travers des fenêtres ménagées dans la plaquette de grille.

La mise en place de chaque ressort constitue une opération délicate : il est nécessaire de le localiser de façon précise afin de ne pas le pincer sur la plaquette lors du soudage, et d'éviter toute contamination par projection de soudure. Il y a par exemple risque de fixation du ressort par soudage à travers une fenêtre supérieure dans une orientation telle que les branches ne se trouvent plus en face de la fenêtre inférieure. Un défaut peut également résulter d'un décalage accidentel des deux branches l'une par rapport à l'autre ou d'un défaut de contact lors du soudage.

De tels défauts sont inacceptables dans une grille. En effet, il faut éviter d'une part des forces de serrage du crayon excessives qui pourraient provoquer la destruction locale de la gaine à la suite de dilatations thermiques différentielles, d'autre part un maintien trop lâche qui se traduirait par des vibrations en service et une usure de la gaine.

On connaît déjà des dispositif de mise en place de ressorts qui réduisent considérablement le risque de positionnement défectueux des ressorts par rapport à la plaquette de grille qui doit la recevoir (EP-A-0163568, correspondant à la demande de brevet FR 8407220). Mais le risque n'est pas complètement exclu, notamment dans le cas de ressorts présentant une déformation.

L'invention vise notamment à fournir un ressort à épingle à cheveux destiné aux grilles d'assemblage de combustible nucléaire qui, grâce à sa forme, garantisse un positionnement correct relatif des deux branches et favorise le montage des ressorts sur les plaquettes de grilles en position correcte.

Dans ce but l'invention propose un ressort en épingle à cheveux de maintien de crayon de combustible dans une grille d'assemblage, ressort constitué par une bande repliée pour former deux branches destinées à encadrer une plaquette de grille et à être solidarisées l'une de l'autre à travers des fenêtres ménagées dans la plaquette de grille, caractérisé en ce qu'une des branches présente, dans au moins une zone destinée à s'appuyer sur l'autre branche, une forme en U de largeur correspondant à la largeur de l'autre branche dans la même zone.

Ladite autre branche a avantageusement une largeur localement réduite dans la zone, de façon que l'encombrement latéral de l'U corresponde à celui du reste du ressort. L'encombrement latéral de l'U pourra être prévu de façon à correspondre à la largeur des fenêtres : en s'engageant dans la fenêtre, les branches de l'U garantissent un bon positionnement relatif du ressort et de la plaquette ; en encadrant l'autre branche du ressort, les bras de l'U garantissent un positionnement relatif correct des deux branches.

Les deux branches de l'U peuvent être repliées à peu près à 90°. Elles peuvent également se refermer légèrement, de façon qu'il y ait encliquetage de l'autre branche sur celle qui comporte l'U. Mais en contrepartie cette solution ne provoque pas un autocentrage relatif des branches. Dans certains cas, on sera donc amené à adopter au contraire une forme évasée de l'U pour favoriser l'autocentrage.

L'invention propose également une grille constituée par des plaquettes disposées selon deux directions au moins pour définir des cellules, certaines au moins des plaquettes portant des ressorts du genre ci-dessus défini, en un matériau conservant son élasticité sous irradiation, tandis que les plaquettes sont en un alliage à faible section de capture neutronique, tel qu'un alliage à base de zirconium.

L'invention sera mieux comprise à la lecture de la description qui suit de dispositifs qui en constituent des modes particuliers de réalisation, donnés à titre d'exemples non limitatifs. La description se réfère aux dessins qui l'accompagnent, dans lesquels :

— la figure 1 est une vue en perspective d'un fragment d'une grille d'assemblage combustible munie de ressorts suivant un mode de réalisation de l'invention,

— les figures 2A et 2B sont des vues en coupe suivant un plan vertical montrant respectivement un ressort double (à deux branches actives) et un ressort simple (dont une branche constitue ressort et l'autre constitue butée),

— la figure 3 est une vue de détail à grande échelle, en élévation, montrant la constitution des branches des ressorts montrés en figure 1 et 2A, dans les zones de soudage,

— la figure 4 est une vue en coupe suivant la ligne IV-IV de la figure 3,

— les figures 5 et 6, similaires aux figures 3 et 4, montrent une variante de réalisation de l'invention,

— les figures 7 et 8, encore similaires aux figures 3 et 4 montrent une autre variante encore de réalisation,

— la figure 9 est une vue de droite de la figure 7, destinée à mieux faire apparaître l'emboitement des deux branches du ressort l'une dans l'autre.

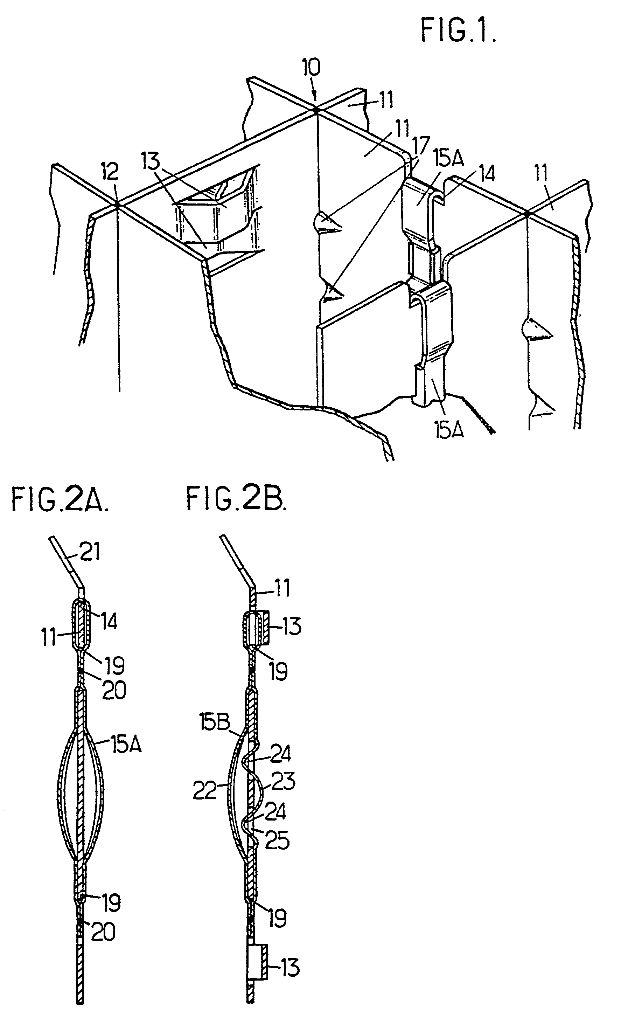

La grille 10 dont une fraction est montrée en figure 1 a une constitution générale classique, qui peut par exemple être celle dont on trouvera une description dans le document EP-A-033263. Elle ne sera donc pas décrite en détail.

Cette grille 10 est constituée par des plaquettes 11, généralement en alliage à base de zirconium dénommé "zircaloy", assemblées à mi-fer et soudées en leurs points de raccordement 12.

Chacune des plaquettes 11 comporte des bossages 13 d'appui de crayons de combustible (non représentés) et est percée de fenêtres coopérant avec les ressorts destinés à appliquer les crayons sur les bossages. Sur la figure 1 apparaissent uniquement des ressorts doubles 15A qui s'insèrent dans des échancrures 14 des plaquettes débouchant sur l'une des tranches.

Comme le montre la figure 2A, chacun des ressorts 15A peut être mis en place en glissant ses branches de part et d'autre de la plaquette 11 jusqu'à ce que la boucle supérieure du ressort vienne au contact de la plaquette, au fond de l'échancrure 14. Des fenêtres 19 ménagées dans la plaquette permettent de fixer les deux branches de ressort directement l'une sur l'autre à l'aide d'un point de soudure 20.

Le ressort simple 15B montré en figure 2B est de constitution dissymétrique. Sa branche 22 est similaire aux branches du ressort 15A. L'autre branche 23 est dessinée de façon à constituer une rotule délimitée par deux plis 24 susceptibles de venir en contact avec la branche 22 à travers des ouvertures 25 de la plaquette, pour éviter de transmettre les efforts de compression de celle-ci. Comme dans le cas précédent, les deux branches du ressort 15B sont soudées l'une à l'autre à travers des fenêtres 19 sur la grille terminée. Mais la boucle ne vient pas se placer au fond d'une échancrure, mais dans un prolongement de la fenêtre supérieure 19, ménagée par un des bossages 13.

L'une des branches de chaque ressort conforme à l'invention présente une partie de largeur réduite dans au moins une zone destinée à s'appliquer sur l'autre branche et cette dernière a, dans la même zone, une section transversale en forme en U.

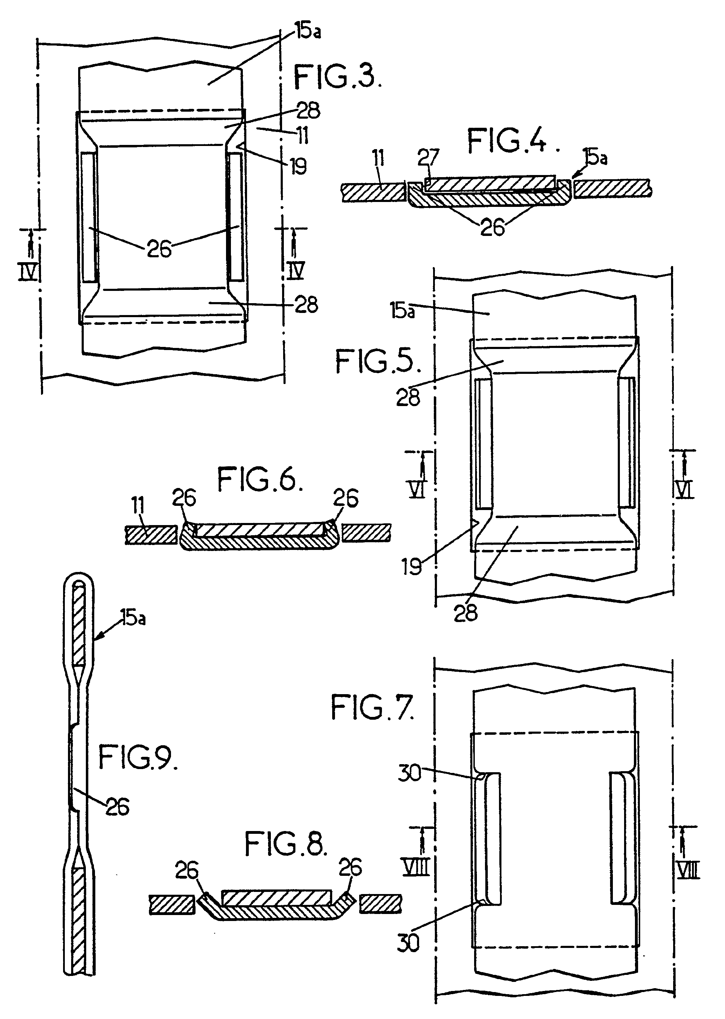

Dans le mode de réalisation montré en figure 1, 3 et 4, la réduction de largeur de la première branche est telle que subsiste, entre la partie de largeur réduite et les arêtes de la fenêtre 19, des intervalles au moins égaux à l'épaisseur de la bande servant à constituer le ressort. L'autre branche présente localement une largeur accrue pour présenter des appendices 26 qui sont rabattus sensiblement à 90° vers la première branche. Les appendices 26 encadrent en conséquence la partie de largeur réduite. Ils ont avantageusement une hauteur presque égale à l'épaisseur de la plaquette (figure 4) de façon à retenir latéralement la première branche et à se verrouiller dans la fenêtre 19.

Pour faciliter l'entrée de la partie de largeur réduite dans le U et éviter l'apparition de contraintes excessives, les appendices 26 sont repliés avec des congés arrondis 27 plutôt qu'à angle vif. Toujours pour réduire les contraintes, la partie de largeur réduite se raccorde à la partie courante du ressort progressivement, par exemple par une portion trapézoïdale 28 plutôt que par un redan à 90°.

Dans le mode de réalisation montré en figures 5 et 6, où les organes correspondant à ceux des figures 3 et 4 sont désignés par le même numéro de référence, les appendices 26 sont repliés de façon que les bras du U se referment légèrement. Ainsi la partie de largeur réduite vient s'encliqueter au fond de l'U et y est retenue, ce qui est favorable du point de vue de la sécurité du soudage. En contrepartie, cette solution n'assure pas un guidage facilitant la mise en place de la partie de largeur réduite dans le U.

Dans la variante montrée en figures 7, 8 et 9, les appendices 26 sont repliés de façon que les bras du U soient divergents, de façon à guider la partie de largeur réduite. Cette largeur réduite correspond à la largeur du fond du U (figure 8) de façon qu'il puisse y avoir serrage axial des branches l'une contre l'autre. Au lieu de présenter des portions trapézoïdales de raccordement, le ressort montré en figure 7 à 9 comporte des portions à arêtes courbes 30 qui ont l'avantage de mieux fixer la position longitudinale relative des deux branches.

L'invention ne se limite pas aux modes particuliers de réalisation qui ont été décrits ci-dessus. De nombreuses variantes sont possibles. Si en particulier on souhaite éviter de prévoir une largeur supplémentaire de la bande dans laquelle est découpé le ressort à l'emplacement des appendices, on peut réduire davantage la largeur de la partie rétrécie et délimiter les bras du U par des fentes ménagées en partie courante de la bande.

Quel que soit le mode de réalisation adopté, la mise en oeuvre de l'invention permet d'améliorer les conditions de soudage et donc la qualité de la soudure obtenue, en garantissant le contact des deux branches l'une sur l'autre et en limitant les projections de soudure sur les plaquettes de grilles. La mise en place latérale des ressorts est également améliorée notamment en ce qui concerne le risque de chevauchement, de baillement des lames et d'absence de liberté de débattement des ressorts.

## Revendications

1. Ressort (15A) en épingle à cheveux de maintien de crayon de combustible dans une grille d'assemblage, (10) ressort constitué par une bande repliée pour former deux branches (22, 23) destinées à encadrer une plaquette de grille (11) et à être solidarisées l'une de l'autre par soudage à travers des fenêtres (19) ménagées dans la plaquette de grille, caractérisé en ce qu'une des branches présente, dans au moins une zone destinée à s'appuyer sur l'autre branche, une section transversale en forme de U de largeur correspondant à la largeur de l'autre branche dans la même zone.

2. Ressort selon la revendication 1, caractérisé en ce que ladite autre branche a une largeur localement réduite dans la zone, de façon que l'encombrement latéral de l'U corresponde à celui du reste du ressort.

3. Ressort selon la revendication 1 ou 2, caractérisé en ce que l'encombrement latéral de l'U correspond à la largeur des fenêtres.

4. Ressort selon la revendication 1, 2 ou 3, caractérisé en ce que les branches de l'U sont constituées par des appendices (26) repliés sensiblement à 90°.

5. Ressort selon la revendication 1, 2 ou 3, caractérisé en ce que les branches de l'U se referment légèrement pour que l'autre branche s'y encliquète.

6. Ressort selon la revendication 1, 2 ou 3, caractérisé en ce que l'U présente une forme évasée d'autocentrage.

7. Ressort selon l'une quelconque des revendications précédentes, caractérisé en ce que la branche coopérant avec celle qui présente une forme en U a des parties (28) de raccordement progressif entre la partie courante et la partie de largeur réduite retenue par le U.

8. Grille entretoise (10) pour assemblage de combustible nucléaire, constituée de plaquettes (11) disposées selon deux directions au moins pour définir des cellules, certaines au moins des plaquettes (11) portant des ressorts (15A) suivant l'une quelconque des revendications précédente, en un matériau conservant son élasticité sous irradiation tandis que les plaquettes sont en alliage à faible section de capture neutronique.

## Claims

1. Hairpin spring (15A) for holding a fuel rod within an assembly grid (10), said spring consisting of a strip bent to form two legs (22, 23) arranged for straddling a grid plate (11) and for being mutually connected by welding through windows (19) formed in the grid plate, characterized in that one of the legs has, at least in a zone which is intended to bear on the other leg, a U-shaped transversal cross-section whose width corresponds to the width of the other leg in the same zone.

2. Spring according to claim 1, characterized in that said other leg has a width which is locally reduced in the zone, whereby the lateral size of the U corresponds to that of the remainder of the spring.

3. Spring according to claim 1 or 2, characterized in that the lateral size of the U corresponds to the width of the windows.

4. Spring according to claim 1, 2 or 3, characterized in that the spring as claimed in claim 1, wherein the legs of the U are formed by appendices (26) bent substantially at 90°.

5. Spring according to claim 1, 2 or 3, characterized in that the arms of the U close up slightly so that the other leg can snap thereinto.

6. Spring according to claim 1, 2 or 3, characterized in that the U has a widening shape for self-centering.

7. Spring according to any one of the preceding claims, characterized in that the leg which cooperates with that leg which has a U shape has portions (28) for progressive merging between the current part and the portion of reduced width retained by the U.

8. Spacing grid (10) for a nuclear fuel assembly, consisting of plates (11) which are arranged along at least two directions for defining cells, at least some of the plates (11) carrying springs (15A) according to any one of the preceding claims, of a material which retains its resiliency under irradiation while the plates are of an alloy having a low neutron absorption cross-section.

**Patentansprüche**

1. Haarspangenklemmfeder zur Halterung von Brennstäben in einem Gitter einer Brennelementkassette (10), wobei die Feder aus einem Streifen besteht, der derart gefaltet ist, daß zwei Arme (22, 23) gebildet werden, die dazu bestimmt sind, eine Platte des Gitters (11) zu umfassen und wobei die beiden Arme miteinander mittels Verschweißung durch Fenster (19) hindurch miteinander verbunden sind, wobei die Fenster in die Platten des Gitters eingearbeitet sind, dadurch **gekennzeichnet**, daß einer der Arme in mindestens einem Bereich, der dazu bestimmt ist, gegen den anderen angedrückt zu werden, einen U-förmigen Querschnitt aufweist mit einer Breite, die der Breite des anderen Arms im selben Bereich entspricht.

2. Feder nach Anspruch 1, dadurch gekennzeichnet, daß der andere Arm eine Breite hat, die in dem Bereich lokal eingeschränkt ist derart, daß die seitlichen Ausmaße des Us denen der übrigen Feder entsprechen.

3. Feder nach Anspruch 1 oder 2, dadurch gekennzeichnet, daß die seitlichen Ausmaße des Us der Breite der Fenster entsprechen.

4. Feder nach Anspruch 1, 2 oder 3, dadurch gekennzeichnet, daß die U-förmigen Arme aus Ansätzen (26) bestehen, die etwa um 90° umgebogen sind.

5. Feder nach Anspruch 1, 2 oder 3, dadurch gekennzeichnet, daß die U-förmigen Arme sich leicht umschließen, so daß der jeweils andere Arm sich einklinkt.

6. Feder nach Anspruch 1, 2 oder 3, dadurch gekennzeichnet, daß das U eine selbstzentrierende aufgeweitete Form aufweist.

7. Feder nach einem der vorstehenden Ansprüche, dadurch gekennzeichnet, daß der Arm, der mit dem U-förmigen Arm zusammenwirkt, progressive Verbindungsbereiche (28) aufweist zwischen dem Bereich normaler Breite und dem Bereich reduzierter Breite, der durch das U eingenommen wird.

8. Abstandsgitter (10) für Brennelementkassetten, bestehend aus Platten (11), die in zwei Richtungen orientiert sind, um Kammern zu bilden, wovon wenigstens bestimmte dieser Platten (11) Federn (15A) nach einem der vorstehenden Ansprüche aufweisen, aus einem Material, dessen Elastizität unter Bestrahlung beibehalten wird, wobei die Platten aus einer Legierung mit niedrigem Neutroneneinfangquerschnitt sind.

## FIG.1.

## FIG.2A.    FIG.2B.

FIG.3.

FIG.4.

FIG.5.

FIG.6.

FIG.7.

FIG.8.

FIG.9.